# EUROPEAN PATENT SPECIFICATION

(11) **EP 2 116 928 B1**
(45) Date of publication and mention of the grant of the patent: **13.12.2017**
(21) Application number: 09159408.5
(22) Date of filing: 05.05.2009
(51) Int. Cl.: G06F 3/12

(54) **Methods and structure for generating JDF using a printer definition file**
Verfahren und Struktur zur JDF-Erstellung mittels einer Druckerdefinitionsdatei
Procédés et structure pour générer JDF en utilisant un fichier de définition d'imprimante

(30) Priority: 09.05.2008 US 118173
(43) Date of publication of application: 11.11.2009
(73) Proprietor: Ricoh Company, Ltd., Tokyo 143-8555 (JP)
(72) Inventor: Liu, Yue, Cupertino CA 95014 (US); Sekine, Hitoshi, Chiba (JP)
(74) Representative: Schwabe - Sandmair - Marx

(56) References cited:
- EP-A2- 1 830 250
- ADOBE SYSTEMS INC: "PostScript Printer Description File Format Specification 4.3 - Chapters 1&2" INTERNET CITATION 9 February 1996 (1996-02-09), XP002158174 Retrieved from the Internet: URL:http://partners.adobe.com/asn/develope r/PDFS/TN/5003.PPD_Spec_v4.3.pdf> [retrieved on 2009-09-11]

## Description

### FIELD OF THE INVENTION

The invention relates generally to generating Job Definition Format (JDF) information and more specifically relates to methods and structure for generating a JDF job ticket from a printer definition file.

### BACKGROUND OF THE INVENTION

In many printing environments, including print shops (large and small), production printing and even smaller workgroup environments, it is generally known to create JDF information describing the processing required to print a particular print job. JDF is a widely adopted standard specification for providing information (printing parameters) relating to processing of a print job. The JDF information is typically contained in an object/file referred to as a "job ticket" and is associated with the print data for the print job by entries in the job ticket. A JDF job ticket includes any number of JDF elements required to specify printing parameters associated with the printing of a particular job. Exemplary of such printing parameters are: one or more resource locators identifying content for the material to be printed, rendering parameters indicating options for rendering various types of objects associated with a print job, layout options indicating, for example, n-up, duplex, and other available print options, media parameters for printing (size, weight, color, etc.), etc.

The JDF standards are published by CIP4 (a trade organization), are well known to those of ordinary skill in the art, and are readily available at www. cip4.org. In general, JDF elements are organized as a hierarchical tree such that various parameters are grouped into associated, logical branches of the tree of possible parameters and options. The tree has a common root and branches are associated with certain enumerated groupings of related parameters that may be specified by a user/application in creating a job ticket. Some present-day printing systems include a print server or other control elements that receive a JDF job ticket and process the JDF elements specified therein to directly control aspects of processing of the print job.

Another de facto standard that has evolved in printing systems is Postscript Printer Definition (PPD) developed and standardized by Adobe Systems. A PPD file is a text file that describes features and capabilities of a corresponding printing system. In addition to identifying the available features, the PPD file as defined by Adobe provides Postscript command language strings that implement a corresponding feature in the printing system. Though originally specified by Adobe Systems for support of Postscript capable printing systems, PPD file structures have been extended to define capabilities and features of other printing systems supporting other command language constructs such as HP Printer Command Language (PCL) and Printer Job Language (PJL) . Still further, a similar open standard called General Printer Definition (GPD) has evolved providing a similar text-based structure to the PPD structure to define features and capabilities of a printing system and corresponding command strings to invoke the feature or capability on the printing system. Since the PPD and GPD structures are similar in purpose and general structure, reference herein to "printer definition" files shall be understood as including both PPD and GPD files.

Printer definition files are used by printer driver software modules in an operating system as well as directly used by various application programs. One common usage of the printer definition file for a printing system is to present a user (through a graphical or other user interface) with options and features to be selected in generating print data output for a document to be printed on a corresponding printer. The features and capabilities of a printing device and possible setting for such features are presented to a user desiring to print a document. The user's input selects desired features and/or capabilities and supplies parametric values where appropriate to specify parameters for printing of the document. The driver module then generates the command language strings corresponding to the user's selected options and outputs the generated strings and the user's supplied print data to cause the printer to print the document using the selected parameters. The printer definition file may also be accessed by an application program using an application program interface (API) to similarly select options for printing of a document generated by the application.

Many users are familiar with the typical user interface (e.g., graphical user interface) provided by systems using printer definition files. On a Microsoft Windows PC or an Apple Macintosh system, for example, a user requests printing of a document and is presented with printing systems that may be selected and available features for the selected printing system. The user provides input to select from the available features of a selected printing system and defines parameter values as desired for some such features.

Many print environments (e.g., print shops as noted above) utilize JDF job tickets to define printing parameters rather than the printer definition file approach. For example, in a print shop environment a customer of the print shop could interact with customized software on the print shop's computing systems to define the printing parameters as a JDF job ticket. But most customers of a print shop are unfamiliar with the structure and syntax of the JDF standards and such custom software and thus it is difficult for such a typical customer to generate the requisite JDF job tickets. EP1830250A2 discloses a method for generating Job Definition Format (JDF) commands for printing a print job on an identified printing system, the method comprising: providing a printer definition file correlating features of the identified printing system with JDF elements, wherein the printer definition file includes a plurality of entries, where each entry includes a name identifying a feature available on the identified printing system, as defined by a Postscript Printer Definition (PPD) file or a General Printer Definition (GPD) file, and wherein each entry includes a corresponding JDF element; generating the JDF commands utilizing the JDF elements; and outputting the generated JDF commands to a printing device.

### SUMMARY OF THE INVENTION

The present invention solves the above and other problems, thereby advancing the state of the useful arts, by providing methods and associated structure for generating JDF information (e.g., a JDF job ticket) from a printer definition file structure. The text of the printer definition file in accordance with features and aspects correlates available features of a printing system with JDF elements. The correlated JDF elements may be output to a file to define a JDF job ticket expressing printing parameters for processing for a print job. Thus a user or application may utilize familiar user or API interfaces associated with printer definition files to generate a JDF job ticket. In addition, a standard driver mechanism of the operating system already architected to access printer definition file structures may be used so that the operating system need not be altered.

One aspect hereof provides a method for generating a Job Definition Format (JDF) job ticket for printing a print job on an identified printing system according to claim 1. Still another aspect hereof provides a system for generating a Job Definition Format (JDF) job ticket according to claim 6. The invention may include other exemplary embodiments described below.

### BRIEF DESCRIPTION OF THE DRAWINGS

The same reference number represents the same element or same type of element on all drawings.
FIG. 1 is a block diagram of an exemplary system embodying features and aspects hereof to generate a JDF job ticket using a JDF printer definition file.
FIG. 2 is a block diagram providing exemplary additional details of structure of the JDF generation printer driver of FIG. 1.
FIG. 3 is an exemplary display screen useful for presenting a user with features from a selected JDF printer definition file.
FIG. 4 is an exemplary display screen showing typical features and options that may be selected by a user for generating a corresponding JDF job ticket in accordance with features and aspects hereof.
FIGS. 5-7 are flowcharts describing exemplary methods in accordance with features and aspects hereof for generating a JDF job ticket using JDF printer definition files.
FIG. 8 is a diagram of an exemplary tree data structure useful in generating a JDF job ticket in accordance with the methods of FIGS. 5-7.
FIG. 9 is a block diagram of an exemplary computer system that may utilize a computer readable medium embodying methods in accordance with features and aspects hereof.

### DETAILED DESCRIPTION OF THE PRESENT INVENTION

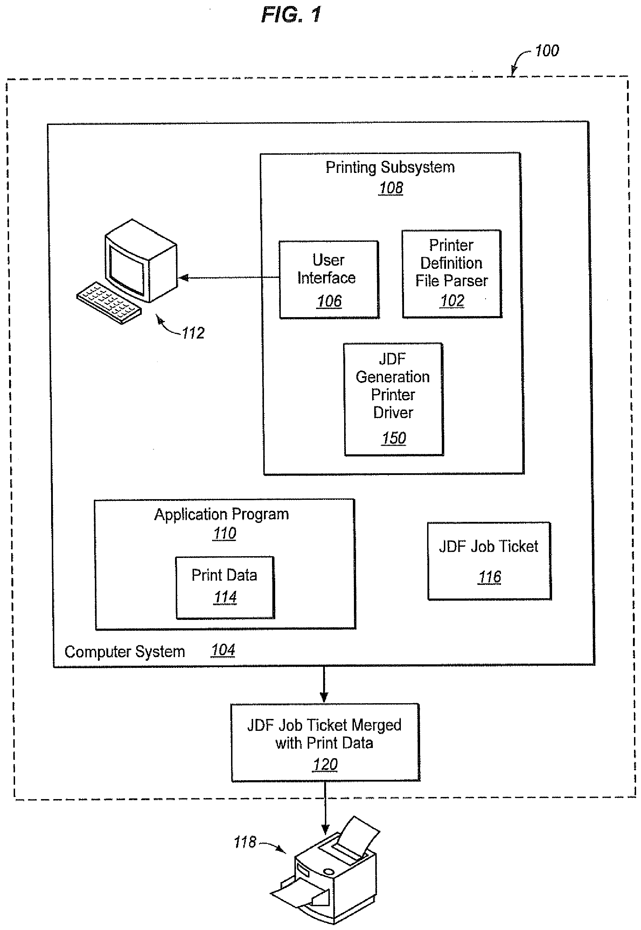

FIGS. 1-9 and the following description depict specific exemplary embodiments of the present invention to teach those skilled in the art how to make and use the invention. For the purpose of this teaching, some conventional aspects of the invention have been simplified or omitted. Those skilled in the art will appreciate variations from these embodiments that fall within the scope of the present invention. Those skilled in the art will appreciate that the features described below can be combined in various ways to form multiple variations of the present invention. As a result, the invention is not limited to the specific embodiments described below, but only by the claims and their equivalents.

FIG. 1 is a block diagram of a system 100 adapted to generate JDF job ticket 116 through use of a driver 150 adapted to generate JDF job ticket information from a printer definition file. System 100 may include computer system 104 operable to select a JDF generation printer driver from among the plurality of such drivers in a printing subsystem 108. Printing subsystem 108 may therefore represent standard user interfaces and application program interfaces (APIs) for selecting a printer driver adapted to use a corresponding printer definition file. Thus features and aspects hereof are easily integrated with existing operating systems without requiring adaptation and modification to the printing subsystem 108 of the existing operating system structures.

Printing subsystem 108 may include a user interface 106 for interacting with a user through input/output device 112. Such interaction may include selecting the desired driver - and in particular may include selection of the JDF generation printer driver 150. Subsystem 108 may also include a printer definition file parser 102 adapted in the subsystem to parse a standard layout and format of a printer definition file. The particular printer definition file used in conjunction with JDF generation printer driver 150 may be parsed by parser 102 to generate the desired JDF job ticket as discussed further herein below. In general, such a printer definition file includes a plurality of entries where each entry includes a name identifying a feature available on the corresponding printing system as may be defined by the PPD specifications or by the GPD specifications. Further, in accordance with features and aspects hereof, each entry includes a corresponding JDF element identified by a JDF element path name string. The JDF element path name string indicates a JDF printing parameter used to effectuate the corresponding named feature available in the corresponding printing system.

In operation, application program 110 generates print data 114 and invokes printing subsystem 108 to generate a JDF job ticket 116 defining printing options to be used in printing print data 114. In general, print data 114 will be binary data or other data already generated in a command language to be processed directly by a printer. For example, print data 114 may be formatted as a Postscript or PCL file for direct processing by a printer 118. Application program 110 invokes the printing subsystem 108 through standard API function calls and/or through user interaction using user interface 106 of subsystem 108. For example, user interface 106 of printer subsystem 108 may display available printer drivers (e.g., available printing systems) on a display of device 112 and may receive user input from an associated input device of device 112. Exemplary input devices may include a keyboard, pointer device, touch screen, voice recognition, etc. After interacting with a user to select a desired printer driver (e.g., JDF generation printer driver 150), printing subsystem 108 may retrieve the associated JDF printer definition file (discussed further below) and may interact further through user interface 106 and device 112 to present to a user the available features of the selected JDF generation printer driver 150. For example, certain printers may offer duplex capabilities. Other printers may offer multiple paper media input sources. Still other printing systems may offer a variety of finishing options such as collating, stapling, etc. Printer driver 150 through user interface 106 and using printer definition file parser 102 may interact further with the user to select particular features to be utilized in printing an associated print data file 114. Driver 150 then generates a JDF job ticket 116 utilizing the JDF element path name strings associated with the selected features in the selected printer definition file. Lastly, the generated JDF job ticket 116 and the print data file 114 may be merged (120) and transferred to the selected printing system 118 to eventually print the defined print job. Alternatively, the generated JDF job ticket 116 and associated print data file 114 (separately or merged as 120) may simply be stored or spooled for printing at a later time on the selected printing system. Still further, the print data 114 and the JDF job ticket 116 (separately or merged as 120) may be sent to an appropriate server node such as a print server for further processing of the print job.

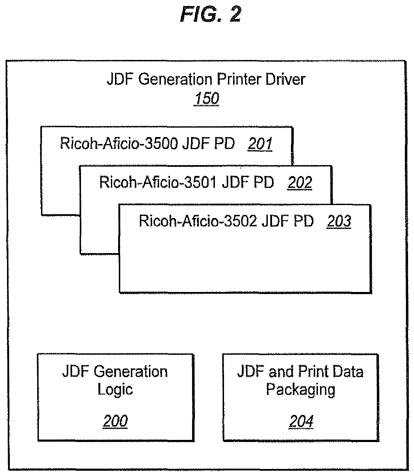

FIG. 2 represents exemplary additional details of JDF generation printer driver 150 of FIG. 1. Driver 150 may include a plurality of JDF generation printer definition files 201, 202, and 203 each corresponding to particular printing devices. Thus each printer definition file 201 through 203 is formatted as a standard printer definition file in accordance with the operating system (printing subsystem) requirements and defines JDF strings used for invoking features available on the corresponding printer model. JDF generation logic 200 represents logic to generate JDF directives from the strings provided in the selected printer definition file 201 through 203 to generate a JDF job ticket from the selected features. JDF and print data packaging logic 204 merges the JDF job ticket so generated and the binary print data for transfer to the printer (or print server node).

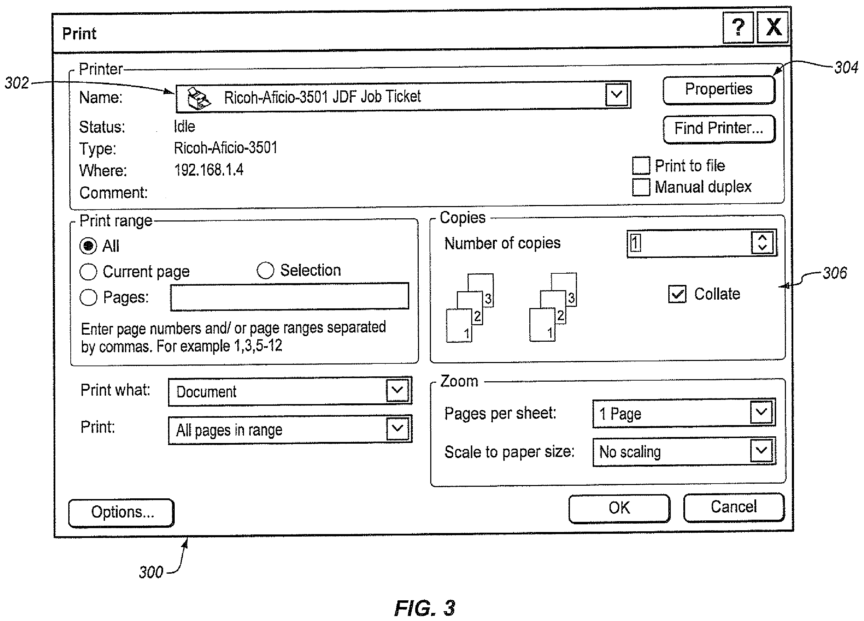

FIG. 3 is an exemplary user interface screen display 300 as may be presented on the display of system 100 of FIG. 1 discussed above. Display screen 300 may be presented to a user as a graphical user interface in response to the user's request to print a document by generating a suitable JDF job ticket for the printing of the document. The display screen 300 includes a list of printing systems 302 for which a printer definition file is available. In accordance with features and aspects hereof a printer definition file that generates a JDF job ticket for a print job may be selected as an available "printing system" selection. Some simpler, standard features for generating the JDF may include, for example, copy and collating related information 306. Still further available features of the selected printing system may be accessed through other related screens such as the "Properties" screen associated with button 304.

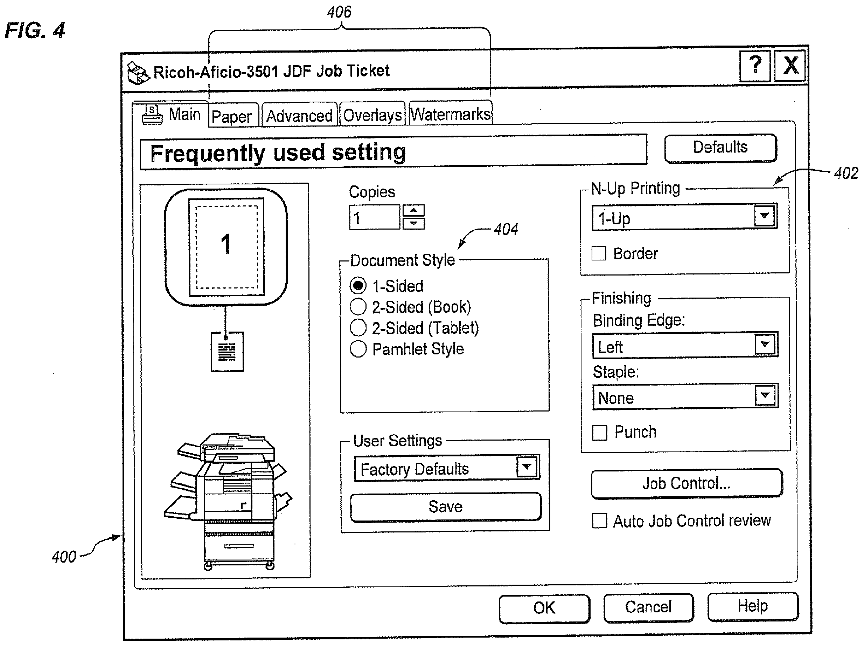

FIG. 4 depicts an exemplary display screen 400 representing such additional features specific to the particular printer model JDF printer definition file selected by the user. As is generally known, such additional features may include "N-Up Printing" options 402, "Document Style" options 404 (e.g., duplex options), and various other options grouped on additional "pages" 406.

Exemplary display screens 300 and 400 of FIGS. 3 and 4 are similar to well-known dialogue screens in Microsoft Windows operating systems allowing a user to specify options or parameters for printing a document. However, display screen 300 of FIG. 3 and 400 of FIG. 4 allow a user to select options for generation of a JDF job ticket rather than merely directing additionally generated print data to a selected printing device. Thus the features displayed on screens 300 and 400 correspond to standard available features programmed in the JDF printer definition file selected by the user input in the field 302 of FIG. 3. Exemplary display screens 300 and 400 are intended merely to suggest a few common printing parameters (available features). Numerous additional features will be readily apparent to those of ordinary skill in the art.

JDF generation printer definition files 201 through 203 of FIG. 2 as discussed above are structured in accordance with the standards of the printing subsystem of the operating system but contain JDF strings to be generated rather than print data command strings. Thus the use of these printer definition files generates a JDF job ticket for use in selecting features in printing the underlying print data. The following excerpt from a JDF printer definition file exemplifies the syntax for specifying JDF element path names in the printer definition file for purposes of generating a JDF job ticket. This excerpt specifies a "default" output bin parameter and a "standard" output bin parameter to be selected by a user. The "FoomaticRIP" nomenclature is well known to those of ordinary skill in the art as a standard extension technique used in printer definition files on Linux platform to designate the textual name of the feature and the string to be used to invoke or set that feature (here as JDF element path names in bold italics for emphasis in this discussion):
*OpenUI *OutputBin/Destination: PickOne
*FoomaticRIPOption OutputBin: enum JCL A
*OrderDependency: 210 AnySetup *OutputBin
*DefaultOutputBin: Default
*OutputBin Default/Printer Default: "%% FoomaticRIPOptionSetting: OutputBin=Default"
*FoomaticRIPOptionSetting OutputBin=Default:
   " JDF/ResourcePool/DigitalPrintingParams/Outputbin=DEFAULT; JDF/ResourcePool/DigitalPrintingParams/ID=IDDigitalPrintingParams; JDF/ResourceLinkPool/DigitalPrintingParamsLink/rRef=IDDigitalPrintingParam s;
      JDF/ResourceLinkPool/DigitalPrintingParamsLink/Usage=Input; "
*OutputBin Standard/Internal Tray 1: "%% FoomaticRIPOptionSetting: OutputBin=Standard"
*FoomaticRIPOptionSetting OutputBin=Standard:
   " JDF/ResourcePool/DigitalPrintingParams/Outputbin=STANDARD; JDF/ResourcePoo1/DigitalPrintingParams/ID=IDDigitalPrintingParams; JDF/ResourceLinkPool/DigitalPrintingParamsLink/rRef=IDDigitalPrintingParam s;
      JDF/ResourceLinkPool/DigitalPrintingParamsLink/Usage=Input; "

Those of ordinary skill in the art will readily recognize suitable encodings of numerous other features that may be specified to generate a JDF job ticket. Thus the above excerpt is intended merely as exemplary of one possible such features. By way of further example, a duplex print option may specify a translation into JDF strings such as:
" JDF/ResourcePool/LayoutPreparationParams/sides=TwoSidedFlipY; JDF/ResourcePool/LayoutPreparationParams /ID=IDLayoutPreparationParams; JDF/ResourceLinkPool/LayoutPreparationParamsLink/rRef-IDLayoutPreparationParams; JDF/ResourceLinkPool/LayoutPreparationParamsLink/Usage=Input; "

If a user selects a JDF job ticket generation printing system (printer definition file) and selects the standard output bin option and a duplex print option, the processing of the printer definition file directives to generate corresponding JDF from the above exemplary entries may generate part of a JDF job ticket as follows:

```
 <JDF>
   <Resource Pool>
      <DigitalPrintingParams Outputbin=STANDARD
      ID=IDDigitalPrintingParams/>
      <LayoutPreparationParams sides=TwoSidedFlipY
      ID=IDLayoutpreparationParams/>
   </ResourcePool>
   <ResourceLinkPool>
      < DigitalPrintingParamsLink rRef=IDDigitalPrintingParams
      Usage=Input/>
      <LayoutPreparationParamsLink rRef=IDLayoutPreparationParams
      Usage=Input/>
    </ResourceLinkPool>
    </JDF>
```

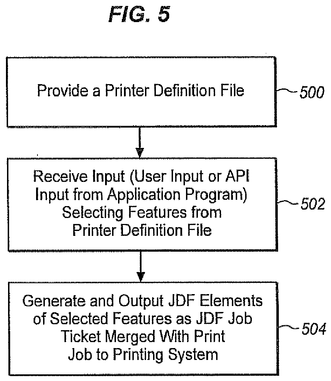

FIG. 5 is a flowchart describing an exemplary method in accordance with features and aspects hereof to generate a JDF job ticket based on information encoded within a printer definition file (such as a PPD and/or GPD file). The method of FIG. 5 may be performed by printing subsystem or a driver module operable on a suitable computing system such as discussed above with respect to driver 150 in computer system 104 of FIG. 1. Step 500 first provides a printer definition file from a suitable source. As noted, the printer definition files may be stored locally within the computer system performing the method or may be stored in networked storage devices accessible to the system performing the method. In one exemplary embodiment, a user may be presented with a suitable display for indicating all known printing systems and user input may be received to select among the known printing systems. In the alternative, an application program utilizing a suitable application program interface may inquire as to all known printing systems and retrieve the printer definition file for a selected device printing system. Step 502 receives input selecting particular features from the JDF printer definition file associated with the selected printing system. As above where the selection is made by user input, a user may designate particular features among the available features for inclusion in the JDF job ticket to be generated. In addition, user input may provide suitable parameter values for selected, available features. Still further, as noted above, an application program may utilize a suitable application program interface (API) to select desired printing parameters from among the available features in the JDF printer definition file and to provide values for the selected printing parameters. Step 504 then generates and outputs a JDF job ticket comprising the JDF elements and values corresponding to the selected available features from the selected JDF printer definition file. The generated JDF job ticket along with the associated print data may be output directly to the selected printing system or may be stored or spooled for later transmission to the appropriate printing system. Exemplary additional details of generation of the JDF job ticket using the strings in the printer definition file are discussed herein below.

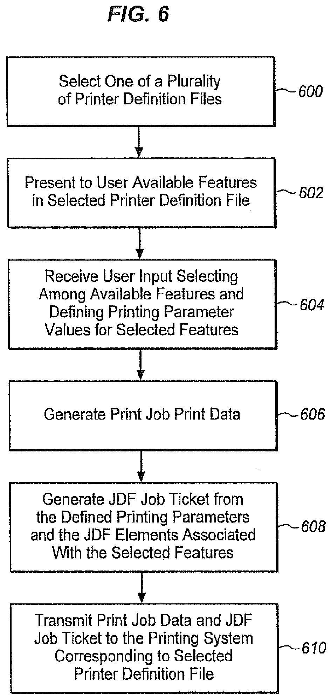

FIG. 6 is a flowchart describing another exemplary method in accordance with features and aspects hereof to generate a JDF job ticket from information stored in a JDF printer definition file associated with a selected printing system. The print data may be generated in any suitable page description language including, for example, Postscript, PCL, PDF, etc. Step 600 first selects one of a plurality of printer definition files each associated with a corresponding printing system. The selection process may utilize a user interface with an appropriate display and user input device for interaction with the user to select the desired printer definition file. Step 602 presents to the user all available features in the selected printer definition file. As noted above, each printing system may support a different complement of available features as indicated by its corresponding JDF printer definition file. Following presentation of all available features to the user in step 602, step 604 receives user input selecting from among the presented available features those features which the user wishes to include in the JDF job ticket for printing of the generated print job. Any necessary parameter values associated with a selected available feature may also be specified by user interaction of step 604. Step 606 then generates print data to be applied to an appropriate printing system in accordance with the features and options selected by the user in step 604. Step 608 generates the JDF job ticket from the defined printing parameters selected by the user in step 604. The JDF element path name strings associated with the selected features may be concatenated or appended to a suitable memory to generate the job ticket information. Step 610 then transmits the print job's print data and the generated JDF job ticket to the selected printing system that corresponds to the selected printer definition file. As noted above, the print job data and generated JDF job ticket may be sent directly to a printing system - often through a print server computing node adapted to process the JDF job ticket. In the alternative, the print data and JDF job ticket may be stored or spooled for later printing of the generated print job.

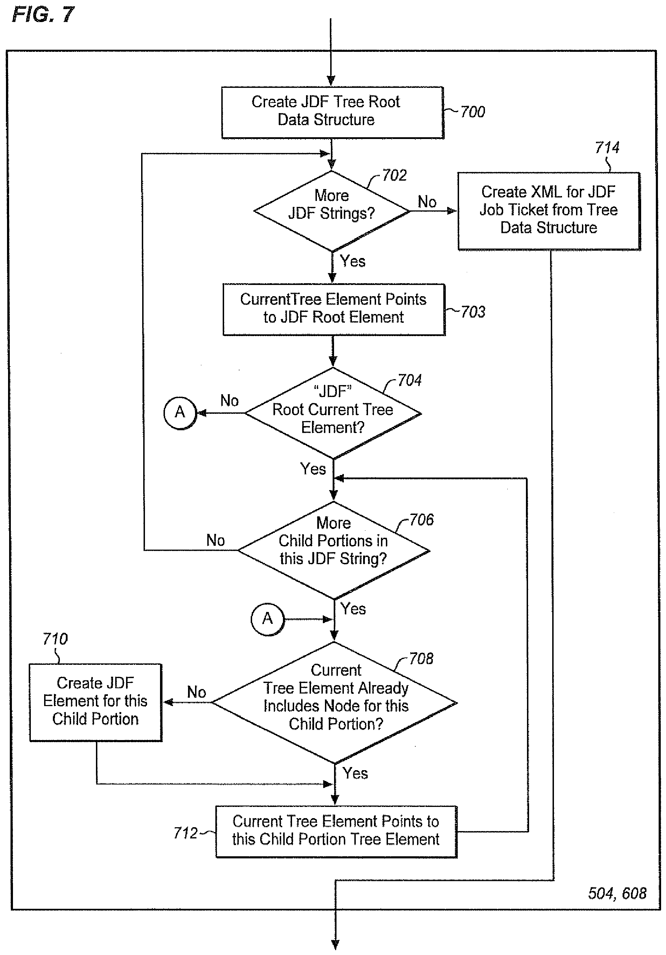

FIG. 7 is a flowchart describing exemplary additional details of the processing of steps 504 or 608 of FIGS. 5 or 6 to generate the extensible Markup Language (XML) statements forming the JDF job ticket from the JDF strings selected from the printer definition file by user input (or API interaction) . As is known in the art, JDF strings in a job ticket specify a name representing a hierarchical mapping of features desired for printing a corresponding print job. To generate the XML representation of the JDF job ticket, a tree data structure may be created to represent all the specified features in the JDF strings selected by the user/application from the printer definition file. Step 700 initializes the method to create a tree element representing the "JDF" root of all JDF strings that may be selected from the selected JDF generation printer definition file. Elements 702 through 712 are then iteratively operable for each JDF string selected from the printer definition file to add tree elements from the created root JDF element structure. Step 702 first determines whether all selected JDF strings have been processed. If so, processing continues at step 714 to generate the XML file representing the JDF job ticket based on the generated JDF element tree structure. Those of ordinary skill in the art will readily recognize well known techniques to traverse the tree structure and generate corresponding XML tags from the JDF element tree data structures.

If more selected JDF strings remain to be processed, step 703 resets the pointer to the current tree element to point to the "JDF root element (i.e., the root of the tree structure) . Step 704 determines whether the next selected JDF string specifies its root as the "JDF" name or the JDF prefix has been omitted. If the JDF string specifies "JDF" as its root in the naming standards, steps 706 through 712 are iteratively operable to process the present JDF string through all its hierarchical layers of the JDF naming standard. Step 706 determines whether this JDF string has been completely processed or whether more "child" portions of the JDF string remain to be entered into the tree structure. If processing of this JDF string is complete, processing continues looping back to step 702. If more child portions remain to be processed in this JDF string, step 708 determines whether the next child portion is already entered in the tree structure. If not, step 710 adds a new JDF element to the tree structure to represent this new child portion added to the current branch of the tree indicated by the current pointer value. In both cases, step 712 next updates the current pointer to the JDF element in the tree structure representing the current child portion of the JDF string. Processing then continues looping back to step 706 to process additional child portions of the current JDF string (if any).

The method of FIG. 7 may also be understood with reference to an exemplary tree structure generated from exemplary JDF strings as discussed above. For example, assume selected strings as follows:
JDF/ResourcePool/DigitalPrintingParams/Outputbin=STANDARD;
JDF/ResourcePool/DigitalPrintingParams/ID=IDDigitalPrintingParams;
JDF/ResourcePool/LayoutPreparationParams/sides=TwoSidedFlipY;
JDF/ResourcePool/LayoutPreparationParams /ID=IDLayoutPreparationParams;

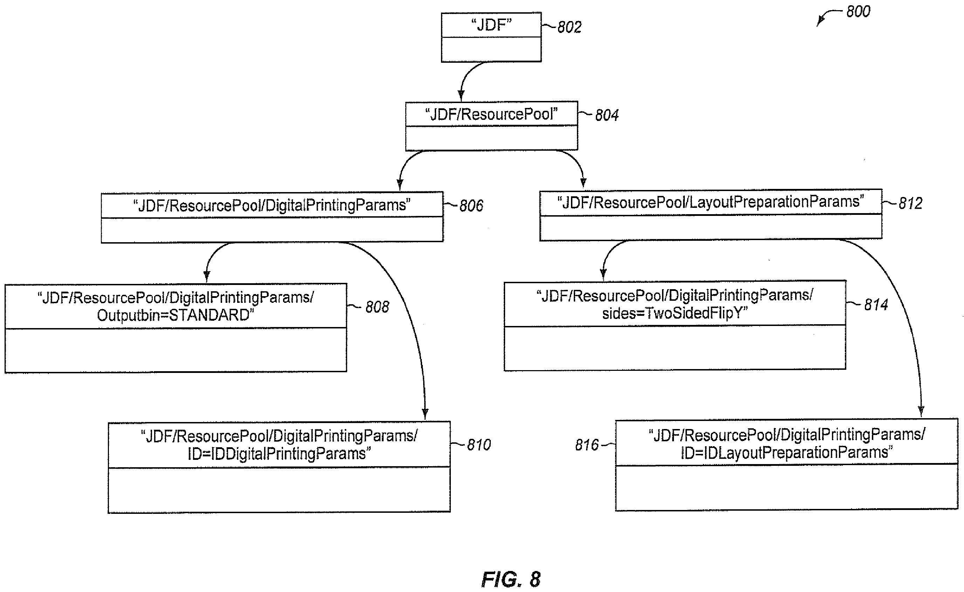

FIG. 8 represents a tree structure 800 generated from these selected strings. The root element 802 is created to start the processing of the method of FIG. 7. Element 804 is created when the method next encounters the "ResourcePool" child portion of the first selected string. Tree element 806 is then created when the "DigitalPrintingParams" child portion of the first string is encountered in the method. Tree element 808 is next created when the leaf node "Outputbin=STANDARD" is encountered. In processing the second string, the current pointer is reset to the root node of the tree (800) in step 703. As the "ResourcePool" and "DigitalPrintingParams" child portions of the string are encountered, the method finds the previously created nodes 802, 804, and 806. Encountering the new child portion "ID=IDDigitalPrintingParams" causes the method to create the additional leaf node 810. In like manner, processing of the third string, the method first creates node 812 and then creates two leaf nodes 814 and 816.

By traversing this completed tree structure, the XML JDF job ticket is created as:

```
 <JDF>
   <ResourcePool>
      <DigitalPrintingParams Outputbin=STANDARD
      ID=IDDigitalPrintingParams/>
       <LayoutPreparationParams sides=TwoSidedFlipY
       ID=IDLayoutpreparationParams/>
   </ResourcePool>
   </JDF>
```

Those of ordinary skill in the art will readily recognize that additional JDF strings would be provided to fully define a correct JDF job ticket. Thus, the above excerpts are intended merely to show a simple example to aid in understanding the processing of methods hereof to generate a JDF job ticket.

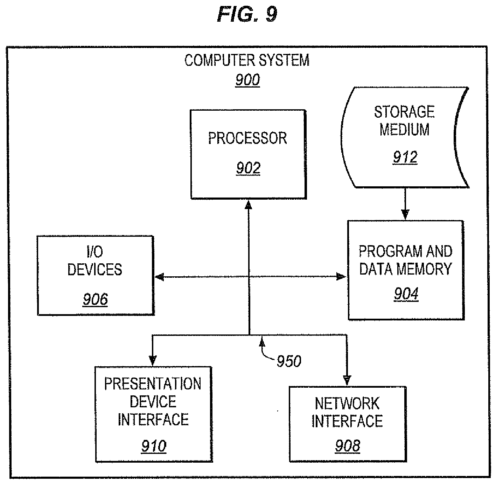

Embodiments of the invention can take the form of an entirely hardware embodiment, an entirely software embodiment or an embodiment containing both hardware and software elements. In one embodiment, the invention is implemented in software, which includes but is not limited to firmware, resident software, microcode, etc. FIG. 9 is a block diagram depicting a computer system 900 adapted to provide features and aspects hereof by executing programmed instructions and accessing data stored on a computer readable storage medium 912.

Furthermore, embodiments of the invention can take the form of a computer program product accessible from a computer-usable or computer-readable medium 912 providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A computer system 900 suitable for storing and/or executing program code will include at least one processor 902 coupled directly or indirectly to memory elements 904 through a system bus 950. The memory elements 904 can include local memory employed during actual execution of the program code, bulk storage, and cache memories which provide temporary storage of at least some program code in order to reduce the number of times code must be retrieved from bulk storage during execution.

Input/output or I/O devices 906 (including but not limited to keyboards, displays, pointing devices, etc) can be coupled to the system either directly or through intervening I/O controllers. Network adapter interfaces 908 may also be coupled to the system to enable the computer system 900 to become coupled to other data processing systems or storage devices through intervening private or public networks. Modems, cable modems, IBM Channel attachments, SCSI, Fibre Channel, and Ethernet cards are just a few of the currently available types of network or host interface adapters. Presentation device interface 910 may be coupled to the system to interface to one or more presentation device such as printing systems and displays for presentation of presentation data generated by processor 902.

Although specific embodiments were described herein, the scope of the invention is not limited to those specific embodiments. The scope of the invention is defined by the following claims and any equivalents thereof.

## Claims

1. A method for generating a Job Definition Format (JDF) job ticket (116) for printing a print job (114) on an identified printing system (118), the method comprising:
providing, to a printer driver (150), a printer definition file (201 to 203) correlating features of the identified printing system (118) with JDF elements,
wherein the printer definition file (201 to 203) includes a plurality of entries, where each entry includes a name identifying a feature available on the identified printing system (118), as defined by a Postscript Printer Definition (PPD) file or a General Printer Definition (GPD) file, and
wherein each entry includes a corresponding JDF element identified by a JDF element path name string indicating a JDF printing parameter used to effectuate the corresponding named feature available in the corresponding printing system (118);
receiving input selecting features from the printer definition file (201 to 203);
generating a JDF job ticket (116) by the printer driver (150), utilizing the JDF element path name strings associated with the selected features in the selected printer definition file (201 to 203); and
outputting, from the printer driver (150), the generated JDF job ticket (116).

2. The method according to claim 1, further comprising:
presenting the printer definition file (201 to 203) as a graphical user interface (GUI),
wherein the step of receiving input comprises receiving user input responsive to presenting the GUI.

3. The method according to claim 1, further comprising:
receiving a request to access the printer definition file (201 to 203) from an application program (110); and
returning the contents of the printer definition file (201 to 203) in response to receipt of the request,
wherein the step of receiving input comprises receiving further requests from the application program (110) to select features from the printer definition file (201 to 203).

4. The method according to any one of claims 1 to 3, further comprising:
transmitting the JDF job ticket (116) and the print job (114) to a printing system (118) for printing of the print job (114) according to the parameters in the JDF job ticket (116) .

5. The method according to any one of claims 1 to 4, further comprising:
receiving user input defining print parameters from the presented available features;
generating a tree structure representing the JDF elements corresponding to the defined print parameters;
generating extensible Markup Language (XML) output comprising a JDF job ticket from the tree structure.

6. A system (100) for generating a Job Definition Format (JDF) job ticket (116), the system (100) comprising:
printer driver (150) having a plurality of printer definition files (201 to 203), wherein each printer definition file (201 to 203) is associated with a corresponding printing system (118), wherein each printer definition file (201 to 203) correlates features of the corresponding printing system (118) with JDF elements; wherein each printer definition file (201 to 203) includes a plurality of entries, where each entry includes a name identifying a feature available on the identified printing system (118), as defined by a Postscript Printer Definition (PPD) file or a General Printer Definition (GPD) file, and
wherein each entry includes a corresponding JDF element identified by a JDF element path name string indicating a JDF printing parameter used to effectuate the corresponding named feature available in the corresponding printing system (118); and
a computer system (104) adapted to access the plurality of printer definition files (201 to 203),
wherein the computer system (104) is operable to select a printer definition file (201 to 203) from the plurality of printer definition files (201 to 203),
wherein the computer system (104) is operable to receive input selecting features from the selected printer definition file (201 to 203),
wherein the printer driver (150) is operable to generate a JDF job ticket (116) utilizing the JDF element path name strings associated with the selected features in the selected printer definition file (201 to 203), and
wherein the computer system (104) is operable to output the generated JDF job ticket (116).

7. The system (100) according to claim 6, further comprising:
an application program (110) operable on the computer system (114),
wherein the application program (110) is operable to select the printer definition file (201 to 203) to receive the available features and to define the print parameters.

8. The system (100) according to claim 6, further comprising:
a display (112) communicatively coupled to the computer system (104);
a user input device (112) communicatively coupled to the computer system (104) for receiving user input;
a user interface (106) operable on the computer system (104) communicatively coupled to the display (112) and the user input device (112),
wherein the user interface (106) is operable to select the printer definition file (201 to 203) responsive to user input and is operable to present the available features to a user on the display (112) and is operable to define the print parameters as JDF elements responsive to user input.

## Patentansprüche

1. Verfahren zum Erzeugen eines "Job Definition"-Format-Auftragstickets (JDF-Auftragstickets) (116) zum Drucken eines Druckauftrags (114) auf einem identifizierten Drucksystem (118), wobei das Verfahren Folgendes umfasst:
Liefern an einen Druckertreiber (150) einer Druckerdefinitionsdatei (201 bis 203), die Merkmale des identifizierten Drucksystems (118) mit JDF-Elementen korreliert,
wobei die Druckerdefinitionsdatei (201 bis 203) mehrere Einträge enthält, wobei jeder Eintrag einen Namen enthält, der ein Merkmal identifiziert, das auf dem identifizierten Drucksystem (118) verfügbar ist, wie durch eine "Postscript Printer Definition"-Datei (PPD-Datei) oder eine "General Printer Definition"-Datei (GPD-Datei) definiert ist, und
wobei jeder Eintrag ein entsprechendes JDF-Element enthält, das durch eine JDF-Elementwegnamenzeichenkette identifiziert ist, die einen JDF-Druckparameter angibt, der verwendet wird, um das entsprechende benannte Merkmal, das in dem entsprechenden Drucksystem (118) verfügbar ist, zu bewirken;
Empfangen einer Eingabe, die Merkmale von der Druckerdefinitionsdatei auswählt;
Erzeugen eines JDF-Auftragstickets (116) durch den Druckertreiber (150) unter Verwendung der JDF-Elementwegnamenzeichenketten, die den ausgewählten Merkmalen in der ausgewählten Druckerdefinitionsdatei (201 bis 203) zugeordnet sind; und
Ausgeben des erzeugten JDF-Auftragstickets (116) von dem Druckertreiber (150).

2. Verfahren nach Anspruch 1, das ferner Folgendes umfasst:
Darstellen der Druckerdefinitionsdatei (201 bis 203) als eine grafische Anwenderschnittstelle (GUI), wobei der Schritt des Empfangens einer Eingabe umfasst, eine Anwendereingabe als Reaktion auf das Darstellen der GUI zu empfangen.

3. Verfahren nach Anspruch 1, das ferner Folgendes umfasst:
Empfangen einer Anforderung, auf die Druckerdefinitionsdatei (201 bis 203) zuzugreifen, von einem Anwendungsprogramm (110); und
Zurückgeben der Inhalte der Druckerdefinitionsdatei (201 bis 203) als Reaktion auf den Empfang der Anforderung,
wobei der Schritt des Empfangens einer Eingabe umfasst, weitere Anforderungen von dem Anwendungsprogramm (110) zu empfangen, Merkmale von der Druckerdefinitionsdatei (201 bis 203) auszuwählen.

4. Verfahren nach einem der Ansprüche 1 bis 3, das ferner Folgendes umfasst:
Senden des JDF-Auftragstickets (116) und des Druckauftrags (114) an ein Drucksystem (118) zum Drucken des Druckauftrags (114) gemäß den Parametern in dem JDF-Auftragsticket (116).

5. Verfahren nach einem der Ansprüche 1 bis 4, das ferner Folgendes umfasst:
Empfangen einer Anwendereingabe, die Druckparameter von den dargestellten verfügbaren Merkmalen definiert;
Erzeugen einer Baumstruktur, die die JDF-Elemente entsprechend den definierten Druckparametern darstellt;
Erzeugen einer Ausgabe einer erweiterbaren Auszeichnungssprache (XML-Ausgabe), die ein JDF-Auftragsticket von der Baumstruktur umfasst.

6. System (100) zum Erzeugen eines "Job Definition"-Format-Auftragstickets (JDF-Auftragstickets) (116), wobei das System umfasst:
einen Druckertreiber (1650) mit mehreren Druckerdefinitionsdateien (201 bis 203), wobei jede Druckerdefinitionsdatei (201 bis 203) einem entsprechenden Drucksystem (118) zugeordnet ist, wobei jede Druckerdefinitionsdatei (201 bis 203) Merkmale des entsprechenden Drucksystems (118) JDF-Elementen zuordnet; wobei jede Druckerdefinitionsdatei (201 bis 203) mehrere Einträge enthält, wobei jeder Eintrag einen Namen enthält, der ein Merkmal identifiziert, das auf dem identifizierten Drucksystem (118) verfügbar ist, wie durch eine "Postscript Printer Definition"-Datei (PPD-Datei) oder eine "General Printer Definition"-Datei (GPD-Datei) definiert und
wobei jeder Eintrag ein entsprechendes JDF-Element enthält, das durch eine JDF-Elementwegnamenzeichenkette identifiziert ist, die einen JDF-Druckparameter angibt, der verwendet wird, um das entsprechende benannte Merkmal, das in dem entsprechenden Drucksystem (118) verfügbar ist, zu bewirken; und
ein Computersystem (104), das ausgelegt ist, auf die mehreren Druckerdefinitionsdateien (201 bis 203) zuzugreifen,
wobei das Computersystem (104) betreibbar ist, eine Druckerdefinitionsdatei (201 bis 203) aus den mehreren Druckerdefinitionsdateien (201 bis 203) auszuwählen,
wobei das Computersystem (104) betreibbar ist, eine Eingabe zu empfangen, die Merkmale von der ausgewählten Druckerdefinitionsdatei (201 bis 203) auswählt,
wobei der Druckertreiber (150) betreibbar ist, ein JDF-Auftragsticket (116) unter Verwendung der JDF-Elementwegnamenzeichenketten, die den ausgewählten Merkmalen in der ausgewählten Druckerdefinitionsdatei (201 bis 203) zugeordnet sind, zu erzeugen und
wobei das Computersystem (104) betreibbar ist, das erzeugte JDF-Auftragsticket (116) auszugeben.

7. System (100) nach Anspruch 6, das ferner Folgendes umfasst:
ein Anwendungsprogramm (110), das auf dem Computersystem (114) betreibbar ist,
wobei das Anwendungsprogramm (110) betreibbar ist, die Druckerdefinitionsdatei (201 bis 203) auszuwählen, um die verfügbaren Merkmale zu empfangen und die Druckparameter zu definieren.

8. System (100) nach Anspruch 6, das ferner Folgendes umfasst:
eine Anzeige (112), die kommunikativ an das Computersystem (104) gekoppelt ist;
eine Anwendereingabevorrichtung (112), die kommunikativ an das Computersystem (10) gekoppelt ist, zum Empfangen einer Anwendereingabe;
eine Anwenderschnittstelle (106), die auf dem Computersystem (104) betreibbar ist, das kommunikativ an die Anzeige (112) und die Anwendereingabevorrichtung (112) gekoppelt ist,
wobei die Anwenderschnittstelle (106) betreibbar ist, die Druckerdefinitionsdatei (201 bis 203) als Reaktion auf eine Anwendereingabe auszuwählen, und betreibbar ist, die verfügbaren Merkmale für einen Anwender auf der Anzeige (112) darzustellen, und betreibbar ist, die Druckparameter als JDF-Elemente als Reaktion auf eine Anwendereingabe zu definieren.

## Revendications

1. Procédé pour générer une fiche Job Definition Format (JDF) (116) pour imprimer une tâche d'impression (114) dans un système d'impression identifié (118), le procédé comprenant les étapes consistant à :
mettre à disposition d'un pilote d'imprimante (150) un fichier de définition d'imprimante (201 à 203) établissant une corrélation entre des caractéristiques du système d'impression identifié (118) et des éléments JDF,
dans lequel le fichier de définition d'imprimante (201 à 203) inclut une pluralité d'entrées, où chaque entrée inclut un nom identifiant une caractéristique disponible dans le système d'impression identifié (118), tel que définie dans un fichier Postscript Printer Définition (PPD) ou un fichier General Printer Definition (GPD), et
dans lequel chaque entrée inclut un élément JDF correspondant identifié par une chaîne de noms de chemin d'accès d'élément JDF indiquant un paramètre d'impression JDF utilisé pour réaliser la caractéristique nommée correspondante disponible dans le système d'impression correspondant (118) ;
recevoir une saisie sélectionnant des caractéristiques dans le fichier de définition d'imprimante (201 à 203) ;
générer une fiche JDF (116) au moyen du pilote d'imprimante (150), en utilisant les chaînes de noms de chemin d'accès d'élément JDF associées aux caractéristiques sélectionnées dans le fichier de définition d'imprimante sélectionné (201 à 203) ; et
sortir du pilote d'imprimante (150) la fiche JDF générée (116).

2. Procédé selon la revendication 1, comprenant en outre les étapes consistant à :
présenter le fichier de définition d'imprimante (201 à 203) sous forme d'interface utilisateur graphique (GUI),
où l'étape consistant à recevoir une saisie comprend la réception d'une saisie de l'utilisateur en réponse à la présentation de la GUI.

3. Procédé selon la revendication 1, comprenant en outre les étapes consistant à :
recevoir une demande d'accès au fichier de définition d'imprimante (201 à 203) en provenance d'un programme d'application (110) ; et retourner le contenu du fichier de définition d'imprimante (201 à 203) en réponse à la réception de la demande,
où l'étape consistant à recevoir une saisie comprend la réception d'autres demandes de sélection de caractéristiques dans le fichier de définition d'imprimante (201 à 203) en provenance du programme d'application (110).

4. Procédé selon l'une quelconque des revendications 1 à 3, comprenant en outre les étapes consistant à :
transmettre la fiche JDF (116) et la tâche d'impression (114) à un système d'impression (118) pour imprimer la tâche d'impression (114) selon les paramètres de la fiche JDF (116).

5. Procédé selon l'une quelconque des revendications 1 à 4, comprenant en outre les étapes consistant à :
recevoir des paramètres d'impression définissant une saisie utilisateur en provenance des caractéristiques disponibles présentées ;
générer une arborescence représentant les éléments JDF correspondant aux paramètres d'impression définis ;
générer une sortie extensible Markup Language (XML) comprenant une fiche JDF à partir de l'arborescence.

6. Système (100) pour générer une fiche Job Definition Format (JDF) (116), le système (100) comprenant :
un pilote d'imprimante (150) comportant une pluralité de fichiers de définition d'imprimante (201 à 203), où chaque fichier de définition d'imprimante (201 à 203) est associé à un système d'impression (118) correspondant, où chaque fichier de définition d'imprimante (201 à 203) établit une corrélation entre des caractéristiques du système d'impression correspondant (118) et des éléments JDF ; où
chaque fichier de définition d'imprimante (201 à 203) inclut une pluralité d'entrées, où chaque entrée inclut un nom identifiant une caractéristique disponible dans le système d'impression identifié (118), tel que définie dans un fichier Postscript Printer Definition (PPD) ou un fichier General Printer Definition (GPD), et
où chaque entrée inclut un élément JDF correspondant identifié par une chaîne de noms de chemin d'accès d'élément JDF indiquant un paramètre d'impression JDF utilisé pour réaliser la caractéristique nommée correspondante disponible dans le système d'impression correspondant (118) ; et
un système informatique (104) adapté pour accéder à la pluralité de fichiers de définition d'imprimante (201 à 203),
où le système informatique (104) peut fonctionner de manière à sélectionner un fichier de définition d'imprimante (201 à 203) parmi la pluralité de fichiers de définition d'imprimante (201 à 203),
où le système informatique (104) peut fonctionner de manière à recevoir une saisie sélectionnant des caractéristiques dans le fichier de définition d'imprimante sélectionné (201 à 203),
où le pilote d'imprimante (150) peut fonctionner de manière à générer une fiche JDF (116) en utilisant les chaînes de noms de chemin d'accès d'élément JDF associées aux caractéristiques sélectionnées dans le fichier de définition d'imprimante (201 à 203) sélectionné, et
où le système informatique (104) peut fonctionner de manière à sortir la fiche JDF générée (116).

7. Système (100) selon la revendication 6, comprenant en outre :
un programme d'application (110) pouvant fonctionner sur le système informatique (114),
où le programme d'application (110) peut fonctionner de manière à sélectionner le fichier de définition d'imprimante (201 à 203) pour recevoir les caractéristiques disponibles et définir les paramètres d'impression.

8. Système (100) selon la revendication 6, comprenant en outre :
un écran d'affichage (112) couplé de manière communicative avec le système informatique (104) ;
un dispositif de saisie utilisateur (112) couplé de manière communicative avec le système informatique (104) pour recevoir une saisie utilisateur ;
une interface utilisateur (106) pouvant fonctionner dans le système informatique (104) couplé de manière communicative avec l'écran d'affichage (112) et le dispositif de saisie utilisateur (112),
où l'interface utilisateur (106) peut fonctionner de manière à sélectionner le fichier de définition d'imprimante (201 à 203) en réponse à une saisie utilisateur et peut fonctionner de manière à présenter les caractéristiques disponibles à un utilisateur sur l'écran d'affichage (112) et peut fonctionner de manière à définir les paramètres d'impression sous forme d'éléments JDF en réponse à une saisie de l'utilisateur.
